# EUROPEAN PATENT APPLICATION

(11) **EP 4 730 641 A1**
(43) Date of publication of application: **22.04.2026**
(21) Application number: 24845313.6
(22) Date of filing: 28.06.2024
(51) Int. Cl.: H02P 27/06

(54) **CONTROL DEVICE, CONTROL METHOD, AND AIR CONDITIONER**

(30) Priority: 27.07.2023 JP 2023122228
(71) Applicant: MITSUBISHI HEAVY INDUSTRIES THERMAL SYSTEMS, LTD., Tokyo 100-8332 (JP)
(72) Inventor: YOSHIDA, Kenji, Tokyo 100-8332 (JP); KANIE, Tetsuo, Tokyo 100-8332 (JP); SUNOHARA, Tetsu, Tokyo 100-8332 (JP); SERIZAWA, Kazuhiko, Tokyo 100-8332 (JP); AIBA, Kenichi, Tokyo 100-8332 (JP); SHIMIZU, Kenji, Tokyo 100-8332 (JP); SUMITO, Kiyotaka, Tokyo 100-8332 (JP)
(74) Representative: Cabinet Beau de Loménie
(86) International application number: PCT/JP2024/023666
(87) International publication number: WO 2025/022931

(57) **Abstract**

A control device according to the present invention controls an inverter that performs AC driving of a motor which rotates and drives a compressor, thereby controlling the rotation speed of the motor. The control device corrects a torque command value, which is calculated according to a deviation between the rotational speed of the motor and a rotational speed command value on the basis of any one of a plurality of patterns to correspond to the load fluctuations of the compressor, and, when controlling the inverter on the basis of the corrected torque command value, recognizes an extreme value of a first polarity and two extreme values of a second polarity different from the first polarity, the extreme values being included in a deviation waveform during a rotation of the compressor, and selects any one of the plurality of patterns on the basis of pieces of information, which are used in control of the motor and respectively obtained at timings when the plurality of extreme values occurred.

## Description

### Technical Field

The present disclosure relates to a control device, a control method, and an air conditioner.

### Background Art

In a rotary compressor, a change in refrigerant gas pressure occurs in each of intake, compression, and discharge strokes during one rotation, and thus steady load torque variations occur. Therefore, a control device described in PTL 1 suppresses a speed variation of a motor by compensating an output torque command in accordance with an estimated rotor position using a product of an average torque and a normalized torque pattern. The normalized torque pattern described in PTL 1 is, for example, a pattern of coefficient values set for every 30 degrees of a rotational angle of the rotor of the motor, and the coefficient values of each section are normalized such that a product of the average torque and the coefficient value of each section matches the average torque in total over all sections. In addition, in the control device, in a case where a plurality of normalized torque patterns are prepared, the normalized torque pattern is selected based on an average load torque for driving the motor, a variation width of the rotation speed of the motor, a peak value of the motor current, or the rotor angle at which the rotation speed of the motor is at a peak.

### Citation List

### Patent Literature

[PTL 1] Japanese Unexamined Patent Application Publication No. 2008-245506

### Summary of Invention

### Technical Problem

According to the control device described in PTL 1, as described above, the normalized torque pattern corresponding to a rotation situation is selected from among the plurality of normalized torque patterns, and it is possible to suppress the speed variation of the motor by compensating the output torque command in accordance with an estimated rotor position using the selected normalized torque pattern.

The present disclosure has been made in view of the background of technology, and an object of the present disclosure is to provide a control device, a control method, and an air conditioner capable of appropriately selecting a pattern.

### Solution to Problem

A control device according to the present disclosure is a control device that controls a rotation speed of a motor that rotationally drives a compressor by controlling an inverter that AC-drives the motor, in which the control device corrects a torque command value calculated according to a deviation between the rotation speed of the motor and a rotation speed command value, based on any one of a plurality of patterns to correspond to a load variation of the compressor, and when the inverter is controlled based on the corrected torque command value, one extreme value of a first polarity and two extreme values of a second polarity different from the first polarity, recognizes the extreme values being included in a waveform of the deviation during one rotation of the compressor, and selects any one of the plurality of patterns based on pieces of information, which are used in control of the motor obtained at each timing at which a plurality of the extreme values occur. According to the present aspect and each of the following aspects, it is possible to appropriately select the pattern.

A control method according to the present disclosure is a method for controlling a rotation speed of a motor that rotationally drives a compressor by controlling an inverter that AC-drives the motor, the method including: correcting a torque command value calculated according to a deviation between the rotation speed of the motor and a rotation speed command value, based on any one of a plurality of patterns to correspond to a load variation of the compressor; and when the inverter is controlled based on the corrected torque command value, one extreme value of a first polarity and two extreme values of a second polarity different from the first polarity, recognizing the extreme values being included in a waveform of the deviation during one rotation of the compressor, and selecting any one of the plurality of patterns based on pieces of information, which are used in control of the motor obtained at each timing at which the plurality of extreme values occur.

An air conditioner according to the present disclosure includes a compressor, a motor that rotationally drives the compressor, an inverter that AC-drives the motor; and a control device that controls a rotation speed of the motor by controlling the inverter, in which the control device corrects a torque command value calculated according to a deviation between the rotation speed of the motor and a rotation speed command value, based on any one of a plurality of patterns to correspond to a load variation of the compressor, and when the inverter is controlled based on the corrected torque command value, one extreme value of a first polarity and two extreme values of a second polarity different from the first polarity, recognizes the extreme values being included in a waveform of the deviation during one rotation of the compressor, and selects any one of the plurality of patterns based on pieces of information, which are used in control of the motor obtained at each timing at which the plurality of extreme values occur.

### Advantageous Effects of Invention

With the control device, the control method, and the air conditioner of the present disclosure, it is possible to appropriately select the pattern.

### Brief Description of Drawings

FIG. 1 is a block diagram showing a configuration example of a control device for a motor connected to an air-conditioning rotary compressor according to a first embodiment of the present disclosure.
FIG. 2 is a block diagram showing a configuration example of a load torque compensation unit according to the first embodiment of the present disclosure.
FIG. 3A is a schematic diagram showing an example of a normalized torque pattern according to the first embodiment of the present disclosure.
FIG. 3B is a schematic diagram showing an example of a normalized torque pattern obtained by multiplying the normalized torque pattern by the modulation rate according to the first embodiment of the present disclosure.
FIG. 4 is a schematic diagram showing an example of load torque compensation control according to the first embodiment of the present disclosure.
FIG. 5 is a block diagram showing a configuration example of a normalized torque pattern selection unit according to the first embodiment of the present disclosure.
FIG. 6 is a schematic diagram for describing an operation example of the normalized torque pattern selection unit according to the first embodiment of the present disclosure.
FIG. 7 is a schematic diagram for describing an operation example of the normalized torque pattern selection unit according to the first embodiment of the present disclosure.
FIG. 8 is a schematic diagram for describing an operation example of the normalized torque pattern selection unit according to the first embodiment of the present disclosure.
FIG. 9 is a schematic diagram for describing torque compensation according to the first embodiment of the present disclosure.
FIG. 10 is a schematic diagram for describing torque compensation according to the first embodiment of the present disclosure.
FIG. 11 is a schematic diagram for describing the torque compensation according to the first embodiment of the present disclosure.
FIG. 12 is a schematic diagram for describing the torque compensation according to the first embodiment of the present disclosure.
FIG. 13 is a schematic diagram for describing the torque compensation according to the first embodiment of the present disclosure.
FIG. 14 is a schematic diagram for describing the torque compensation according to the first embodiment of the present disclosure.
FIG. 15 is a schematic diagram for describing the torque compensation according to the first embodiment of the present disclosure.
FIG. 16 is a schematic diagram for describing the torque compensation according to the first embodiment of the present disclosure.
FIG. 17 is a schematic diagram for describing the torque compensation according to the first embodiment of the present disclosure.
FIG. 18 is a schematic diagram for describing the torque compensation according to the first embodiment of the present disclosure.
FIG. 19 is a block diagram showing a configuration example of a pattern switching determination unit according to a second embodiment of the present disclosure.
FIG. 20 is a schematic block diagram showing a configuration of a computer according to at least one embodiment.

### Description of Embodiments

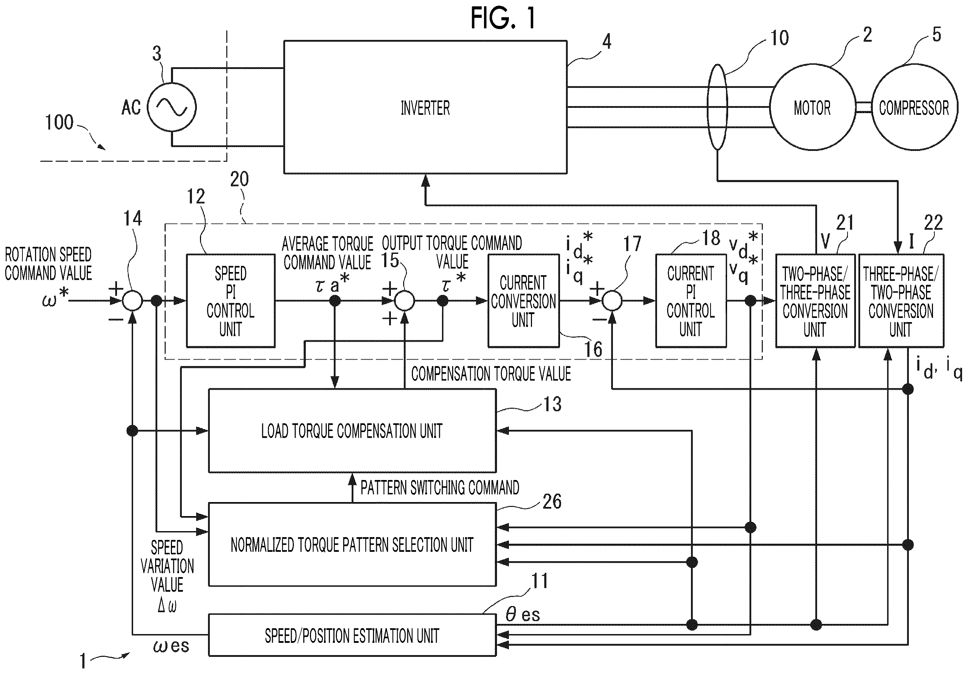

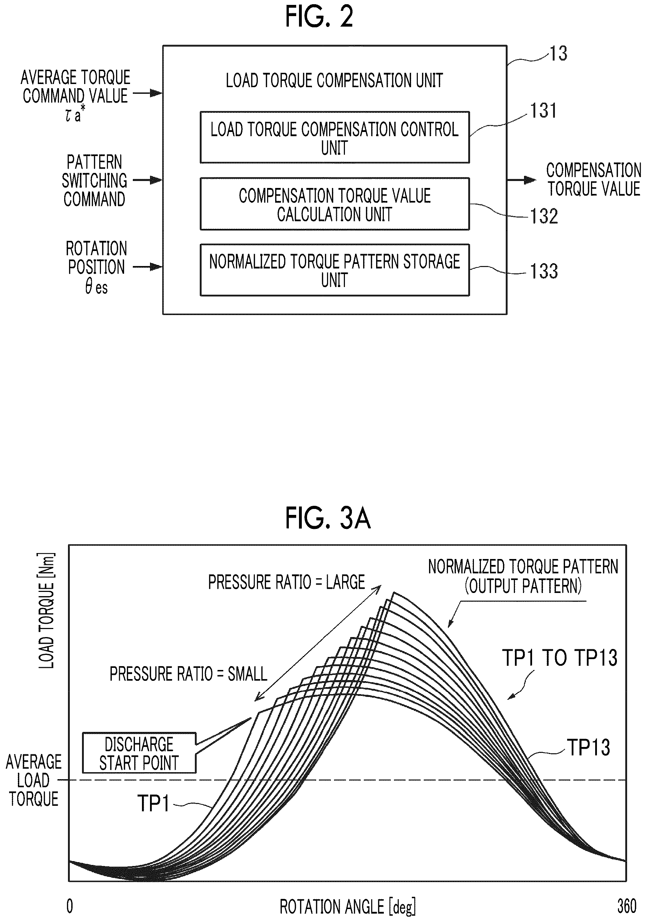

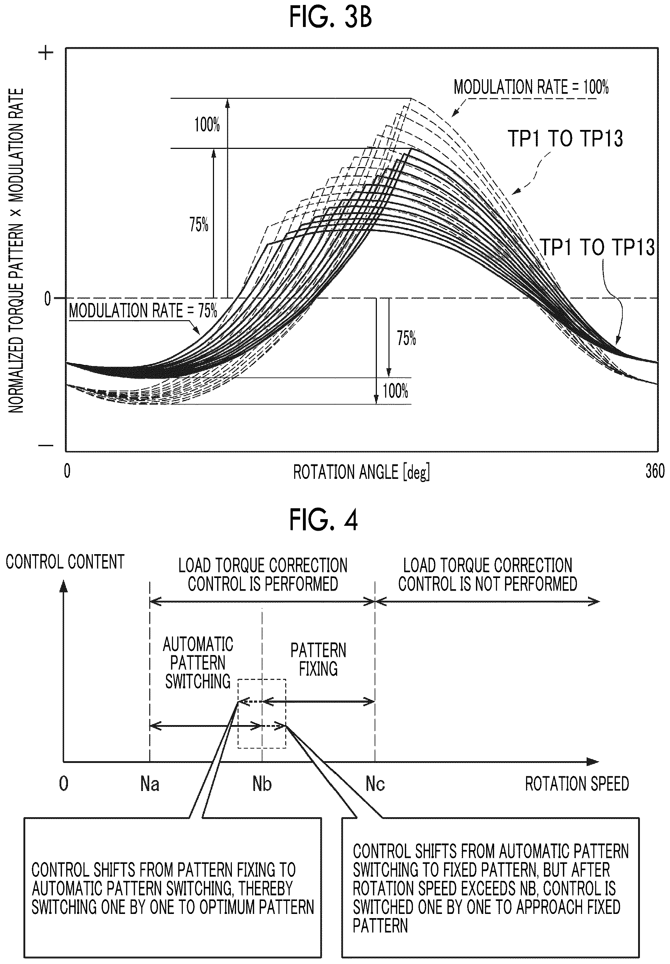

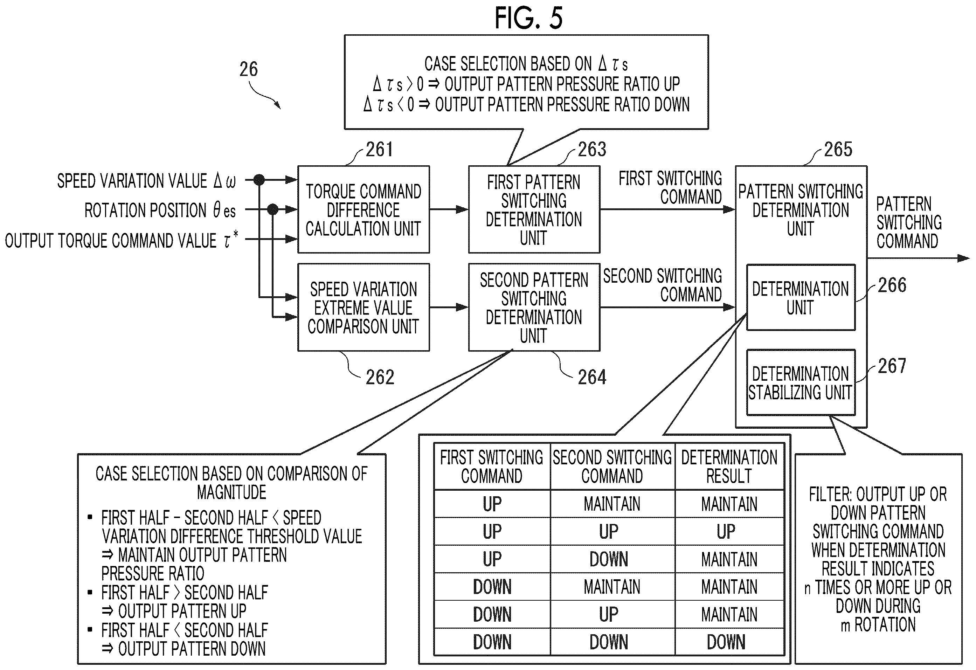

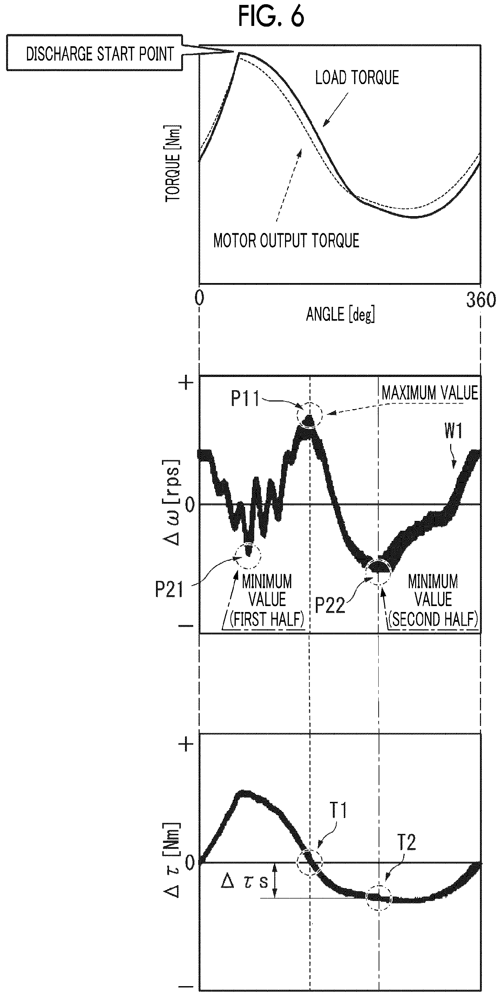

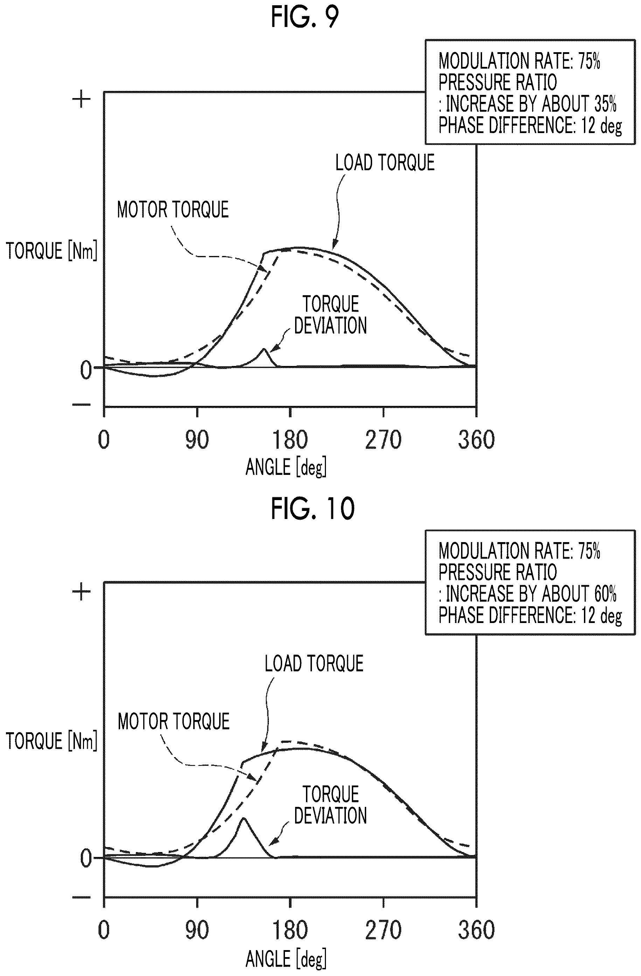

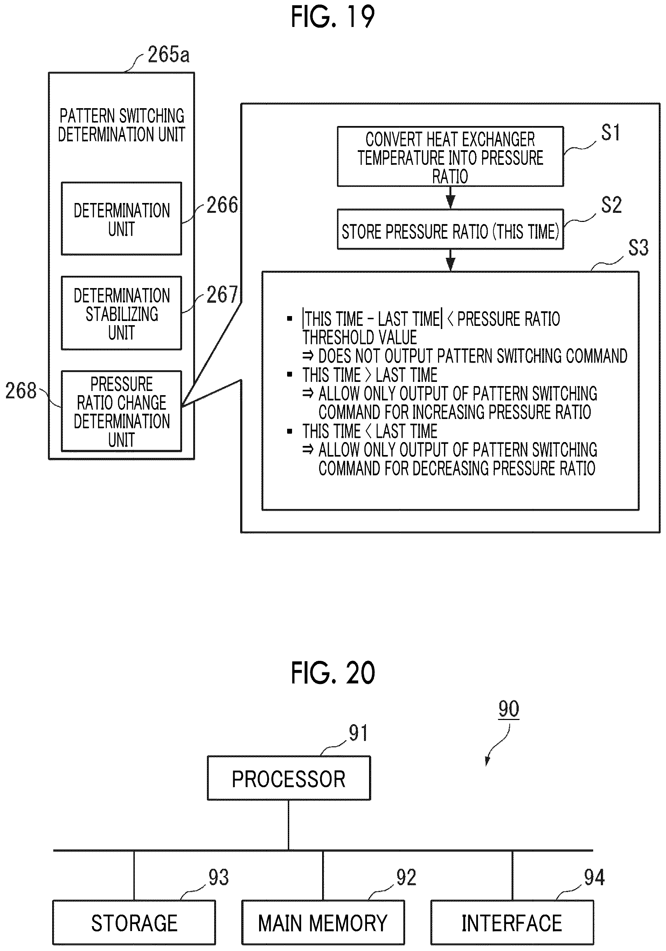

Hereinafter, a control device, a control method, and an air conditioner according to embodiments of the present disclosure will be described with reference to FIGS. 1 to 20. FIG. 1 is a block diagram showing a configuration example of a control device for a motor connected to an air-conditioning rotary compressor according to a first embodiment of the present disclosure. FIG. 2 is a block diagram showing a configuration example of a load torque compensation unit according to the first embodiment of the present disclosure. FIG. 3A is a schematic diagram showing an example of a normalized torque pattern according to the first embodiment of the present disclosure. FIG. 3B is a schematic diagram showing an example of a normalized torque pattern obtained by multiplying the normalized torque pattern by the modulation rate according to the first embodiment of the present disclosure. FIG. 4 is a schematic diagram showing an example of load torque compensation control according to the first embodiment of the present disclosure. FIG. 5 is a block diagram showing a configuration example of a normalized torque pattern selection unit according to the first embodiment of the present disclosure. FIGS. 6 to 8 are schematic diagrams for describing an operation example of the normalized torque pattern selection unit according to the first embodiment of the present disclosure. FIGS. 9 to 18 are schematic diagrams for describing torque compensation according to the first embodiment of the present disclosure. FIG. 19 is a block diagram showing a configuration example of a pattern switching determination unit according to a second embodiment of the present disclosure. FIG. 20 is a schematic block diagram showing a configuration of a computer according to at least one embodiment. In each drawing, the same reference numerals will be assigned to the same or corresponding configurations, and description thereof will be omitted as appropriate.

### <First Embodiment>

FIG. 1 shows a configuration example of a control device 1 according to the first embodiment of the present disclosure. The control device 1 is a control device that controls a rotation speed (= rotation velocity) of a motor 2 by controlling an inverter 4 that AC-drives the motor 2 that rotationally drives a compressor 5 provided in an air conditioner 100. The inverter 4 supplies power to the motor 2 using an AC power supply 3 as a power source. A current sensor 10 detects a value of a current flowing from the inverter 4 to the motor 2. In the example shown in FIG. 1, the air conditioner 100 includes the control device 1, the motor 2, the inverter 4, and the current sensor 10. The control device 1 includes, for example, a computer such as a microcontroller, and peripheral devices, peripheral circuits, and the like of the computer. Then, the control device 1 includes, as a functional configuration composed of a combination of hardware such as a computer and software such as a program executed by the computer, a subtraction unit 14, a speed control unit 20, a load torque compensation unit 13, a normalized torque pattern selection unit 26, a speed/position estimation unit 11, a two-phase/three-phase conversion unit 21, and a three-phase/two-phase conversion unit 22. The speed control unit 20 includes a speed PI control unit (speed proportional integral control unit) 12, an addition unit 15, a current conversion unit 16, a subtraction unit 17, and a current PI control unit 18.

The control device according to the present embodiment is not limited to the example shown in FIG. 1, and may be a control device that controls a motor that drives a compressor such as a rotary compressor. In addition, the compressor is not limited to one provided in an air conditioner. FIG. 1 shows a main configuration related to rotation speed control of the motor 2 by the control device 1, and, for example, some other configurations within the air conditioner 100 or the control device 1, such as a refrigerant circuit, a fan, and configurations including temperature sensors related to temperature control and humidity control, are not shown.

The three-phase/two-phase conversion unit 22 receives as inputs three-phase current values I detected by the current sensor 10 and a rotation position (rotation angle) θes of a rotor of the motor 2 estimated by the speed/position estimation unit 11, converts the three-phase current values I detected by the current sensor 10 into a two-phase d-axis current value id and a two-phase q-axis current value iq on a d-axis and a q-axis, and outputs the d-axis current value id and the q-axis current value iq. The two-phase/three-phase conversion unit 21 receives as inputs the rotation position θes and a two-phase d-axis command voltage value vd* and a two-phase q-axis command voltage value vq* on the d-axis and the q-axis output by the current PI control unit 18, converts the d-axis command voltage value vd* and the q-axis command voltage value vq* into a three-phase voltage value V, and outputs the three-phase voltage value V to the inverter 4. The inverter 4 controls a plurality of switching elements (not shown) included in the inverter based on the three-phase voltage value V output by the two-phase/three-phase conversion unit 21.

The speed/position estimation unit 11 estimates the rotation position θes and a rotation speed ωes of the rotor of the motor 2 based on the two-phase d-axis voltage value vd and the two-phase q-axis voltage value vq output by the current PI control unit 18 and the two-phase d-axis current value id and the two-phase q-axis current value iq output by the three-phase/two-phase conversion unit 22.

The subtraction unit 14 subtracts the rotation speed ωes from a rotation speed command value ω* to calculate a deviation Δω (also referred to as a speed variation value Δω), and outputs the deviation Δω to the speed PI control unit 12 and the normalized torque pattern selection unit 26.

The speed PI control unit 12 calculates an average torque command value τa*, which is an average value of an output torque command value τ* of the motor 2 for reducing the deviation Δω through a proportional integral operation with respect to the deviation Δω, and outputs the average torque command value τa* to the addition unit 15 and the load torque compensation unit 13. In this case, the speed PI control unit 12 calculates and outputs the average torque command value τa* according to the deviation Δω between the rotation speed ωes of the motor 2 and the rotation speed command value ω*.

The load torque compensation unit 13 receives as inputs the average torque command value τa* output by the speed PI control unit 12, the rotation position θes and the rotation speed ωes output by the speed/position estimation unit 11, and a pattern switching command output by the normalized torque pattern selection unit 26, calculates a compensation torque value, and outputs the compensation torque value to the addition unit 15. The compensation torque value is a torque value for compensating for variations in a load torque of the motor 2 during one rotation of the motor 2. FIG. 2 shows a configuration example of the load torque compensation unit 13. The load torque compensation unit 13 shown in FIG. 2 includes a load torque compensation control unit 131, a compensation torque value calculation unit 132, and a normalized torque pattern storage unit 133.

The normalized torque pattern storage unit 133 stores a plurality of normalized torque patterns, which are patterns of a plurality of coefficient values that change according to the rotation position (rotation angle) θes of the motor 2. In the present embodiment, the normalized torque pattern storage unit 133 stores 13 normalized torque patterns (hereinafter, also referred to as torque patterns or patterns) TP1 to TP13, as shown in FIG. 3A. Each of the patterns TP1 to TP13 is a pattern for coping with a load variation of the compressor 5, and corresponds to a plurality of different pressure ratios of the compressor 5, respectively. The pressure ratio is a value obtained by dividing a discharge pressure (absolute pressure) of the compressor 5 by a suction pressure (absolute pressure). In the example shown in FIG. 3A, the pressure ratio of the pattern TP1 is the smallest, the pressure ratios of the patterns TP1 to TP13 increase in order at a predetermined interval, and the pressure ratio of the pattern TP13 is the largest. In FIG. 3A, the horizontal axis corresponds to a rotation position in one rotation (mechanical angle) of the motor 2 from 0° to 360°, and the vertical axis corresponds to a load torque of the motor 2 (driving torque of the compressor 5). In addition, each of the patterns TP1 to TP13 is normalized such that average load torques in one rotation are the same as each other.

The compensation torque value calculation unit 132 selects any one of the patterns TP1 to TP13 based on the pattern switching command output by the normalized torque pattern selection unit 26, and calculates the compensation torque value based on any one of the selected patterns TP1 to TP13. In that case, the selection of any one of the plurality of patterns TP1 to TP13 is performed in the order of the magnitude of the pressure ratio in the direction of increasing or decreasing the pressure ratio. For example, when the currently selected pattern is the pattern TP1, in a case where a pattern switching command (UP) indicating an increase in the pressure ratio is input, the compensation torque value calculation unit 132 selects the pattern TP2. In addition, when the currently selected pattern is the pattern TP1, in a case where a pattern switching command (DOWN) indicating a decrease in the pressure ratio is input, the compensation torque value calculation unit 132 selects the pattern TP1 as it is. In addition, when the currently selected pattern is the pattern TP13, in a case where a pattern switching command (UP) indicating an increase in the pressure ratio is input, the compensation torque value calculation unit 132 selects the pattern TP13 as it is.

The compensation torque value calculation unit 132 determines a coefficient value according to the rotation position (rotation angle) θes of the motor 2 based on any of the normalized torque patterns TP1 to TP13, calculates a compensation torque value by multiplying the average torque command value τa* by the determined coefficient value and further by a predetermined modulation rate. The modulation rate is a coefficient for adjusting the degree of torque compensation. The compensation torque value and the coefficient value take positive, negative, or zero values. In this case, the compensation torque value calculation unit 132 calculates the compensation torque value at each rotation position by using the equation (compensation torque value at each rotation position = average torque command value τa* × normalized torque pattern at each rotation position × modulation rate). FIG. 3B shows an example of a value of (normalized torque pattern × modulation rate) in a case where the modulation rate is 75% (solid line) and in a case where the modulation rate is 100% (broken line). The value of (normalized torque pattern × modulation rate) has values obtained by multiplying the modulation rate for each of positive and negative values with zero as a reference. The output torque command value τ* (output value of the addition unit 15) in which the variation in the load torque is compensated for according to the rotation position θes is calculated by adding the compensation torque value calculated by the above equation to the average torque command value τa*. The compensation torque value is a value that compensates for the load torque variation during one rotation, and it is required that the average value of the output torque command values for one rotation compensated for by the compensation torque value matches the average torque command value τa*. That is, it is required that a total value of the compensation torque values for one rotation is zero. In this case, it is required that a total value of the coefficient values constituting (defining) the normalized torque pattern for one rotation is also zero. The compensation torque value calculation unit 132 may calculate the compensation torque value after offsetting the rotation angle θes of the motor 2 by a predetermined value. That is, the compensation torque value calculation unit 132 can calculate the compensation torque value based on the rotation angle θes after adjustment in which the phase is adjusted by a predetermined value. In that case, the magnitude of the phase adjustment can be a predetermined fixed value or, for example, a variable value according to the operating state of the motor 2 or the like.

The load torque compensation control unit 131 controls a value of the compensation torque value output by the load torque compensation unit 13, for example, according to the example of the control content shown in FIG. 4. In FIG. 4, the horizontal axis represents the rotation speed of the motor 2. In the example shown in FIG. 4, the load torque correction control is performed from the rotation speed Na to the rotation speed Nc, and the load torque correction control is not performed when the rotation speed exceeds the rotation speed Nc. In addition, the automatic pattern switching control is performed from the rotation speed Na to the rotation speed Nb, and pattern fixing control is performed from exceeding the rotation speed Nb to the rotation speed Nc. In a case where the load torque correction control is performed, the load torque compensation control unit 131 outputs the value of the compensation torque value calculated based on the normalized torque pattern. In a case where the load torque correction control is not performed, the load torque compensation control unit 131 sets the value of the compensation torque value to a constant zero. In this case, the output torque command value τ* is constant at the average torque command value τa*. In addition, the automatic pattern switching control is a control in which the load torque compensation unit 13 outputs the torque compensation value calculated by the compensation torque value calculation unit 132 by switching the pattern to any one of the patterns TP1 to TP13 according to the pattern switching command (UP or DOWN). In addition, the load torque compensation control unit 131 sets the modulation rate to, for example, a value of 50% to 100% (for example, 75% constant) in the automatic pattern switching control. The pattern fixing control is a control in which the load torque compensation unit 13 outputs the torque compensation value calculated by the compensation torque value calculation unit 132 by fixing the pattern to any one of the patterns TP1 to TP13 (this pattern is referred to as a fixed pattern). In addition, the load torque compensation control unit 131 sets the modulation rate to, for example, a value of less than 50% (the effect of inertia appears, so that the value of the modulation rate can be reduced as the rotation speed increases, and the compensation amount is set to, for example, 50% to 30% as the rotation speed increases) in the pattern fixation control. In a case where the rotation speed is equal to or less than Nb and then exceeds Nb, the control shifts from the automatic pattern switching to the fixed pattern, but after the rotation speed exceeds Nb, the control is switched one by one to approach the fixed pattern. In addition, in a case where the rotation speed exceeds Nb and then is equal to or less than Nb, the control shifts from the pattern fixing to the automatic pattern switching, thereby switching one by one to an optimum pattern. FIG. 4 shows an example of the control by the load torque compensation control unit 131, and the control by the load torque compensation control unit 131 is not limited to this example.

The addition unit 15 adds the average torque command value τa* output by the speed PI control unit 12 and the compensation torque value output by the load torque compensation unit 13 to calculate the output torque command value τ*, and outputs the output torque command value τ* to the current conversion unit 16 and the normalized torque pattern selection unit 26.

The current conversion unit 16 receives as an input the output torque command value τ* output by the addition unit 15, performs current conversion on the output torque command value τ*, calculates a d-axis command current value id* and a q-axis command current value iq*, and outputs the d-axis command current value id* and the q-axis command current value iq* to the subtraction unit 17.

The subtraction unit 17 receives as inputs the d-axis command current value id* and the q-axis command current value iq*, and the d-axis current value id and the q-axis current value iq, respectively subtracts the d-axis current value id and the q-axis current value iq from the d-axis command current value id* and the q-axis command current value iq*, calculates each deviation of a d-axis component and a q-axis component between the command value and the motor current value, and outputs the deviations to the current PI control unit 18.

The current PI control unit 18 calculates the d-axis command voltage value vd* and the q-axis command voltage value vq* for reducing each deviation through the proportional integral operation with respect to each deviation output by the subtraction unit 17, and outputs the d-axis command voltage value vd* and the q-axis command voltage value vq* to the two-phase/three-phase conversion unit 21, the speed/position estimation unit 11, and the normalized torque pattern selection unit 26.

Next, the normalized torque pattern selection unit 26 will be described with reference to FIG. 5 and the like. FIG. 5 shows a configuration and an operation example of the normalized torque pattern selection unit 26. As shown in FIG. 5, the normalized torque pattern selection unit 26 in the present embodiment includes a torque command difference calculation unit 261, a speed variation extreme value comparison unit 262, a first pattern switching determination unit 263, a second pattern switching determination unit 264, and a pattern switching determination unit 265.

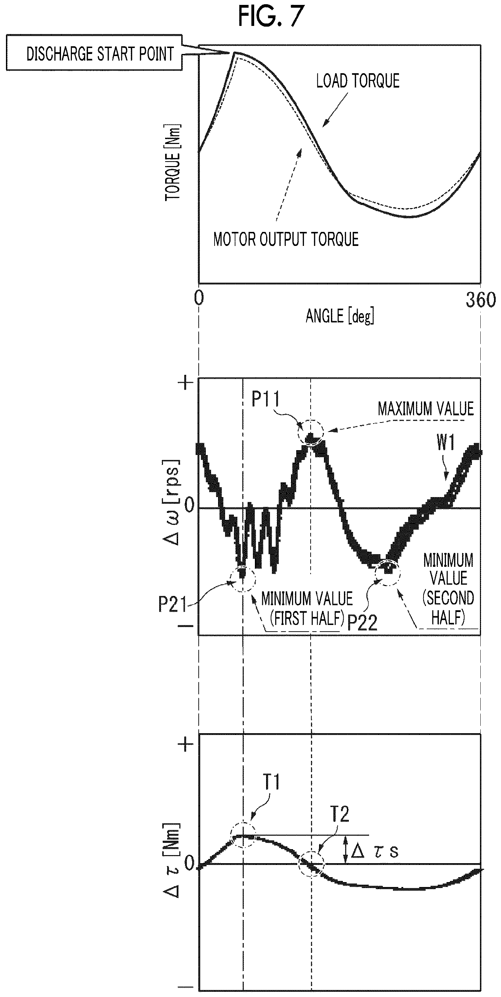

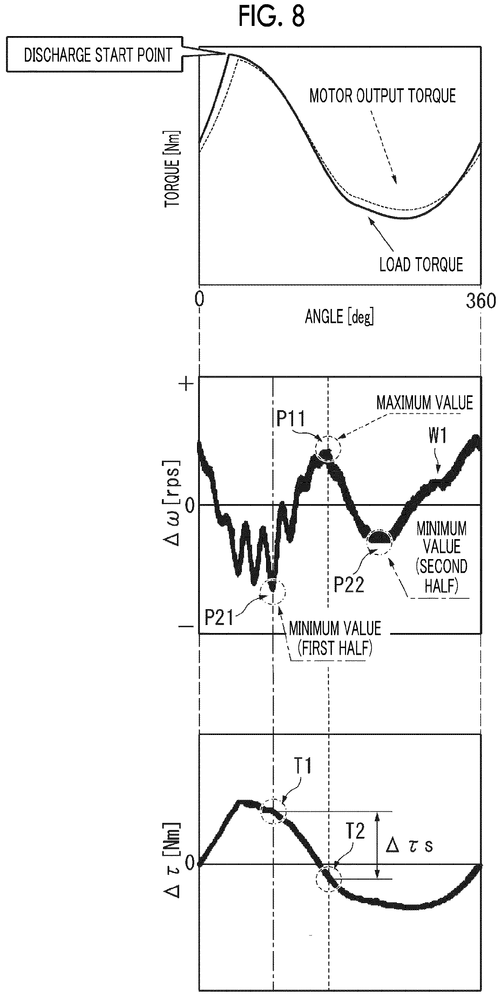

The torque command difference calculation unit 261 receives as inputs the speed variation value Δω, the output torque command value τ*, and the rotation position θes, and calculates and outputs a predetermined torque command difference Δτs. FIGS. 6 to 8 show an example of calculating the torque command difference Δτs. FIGS. 6 to 8 show an example of a correspondence relationship between a torque (load torque and motor output torque), a change in a speed variation value Δω (waveform W1), and a change in a torque deviation Δτ (waveform) with a horizontal axis representing an angle (rotation position θes). FIG. 6 is a case where the motor output torque leads the load torque, FIG. 7 is a case where the motor output torque substantially coincides with the load torque, and FIG. 8 is a case where the motor output torque lags behind the load torque. First, the torque command difference calculation unit 261 recognizes one extreme value (a positive maximum value P11 in FIGS. 6 to 8) of the first polarity and two extreme values (negative minimum values P21 and P22 in FIGS. 6 to 8) of the second polarity different from the first polarity, which are included in the waveform W1 of the deviation Δω during one rotation of the compressor 5. The torque command difference calculation unit 261 assumes that, for example, the waveform W1 of the deviation Δω always includes one maximum value P11 and two extreme values P21 and P22 before and after the maximum value P11, and first recognizes the maximum value on the waveform W1 as the maximum value P11 and the minimum values before and after the maximum value P11 as the extreme values P21 and P22. In the present embodiment, the extreme value P21 and the extreme value P22 are referred to as a minimum value (first half) and a minimum value (second half), respectively. The positive or negative sign of the deviation Δω is relative, and in a case where the sign is inverted from the illustrated case, the maximum value P11 may be treated as a minimum value, and the minimum values P21 and P22 may be treated as maximum values. The extreme value includes the maximum value and the minimum value.

Next, the torque command difference calculation unit 261 calculates a difference Δτs between a difference Δτ (T1 in FIG. 6, T2 in FIG. 7, and T2 in FIG. 8) between the corrected torque command value (output torque command value τ*) obtained at a timing at which the extreme value (P11) of the first polarity is generated and the average value of the torque command values (average torque command value) and a difference Δτ (T2 in FIG. 6, T1 in FIG. 7, and T1 in FIG. 8) between the corrected torque command value (output torque command value τ*) obtained at a timing at which the extreme value (P22 in FIG. 6, P21 in FIG. 7, and P21 in FIG. 8) having a larger absolute value among the two extreme values (P21 and P22) of the second polarity is generated and the average value of the torque command values (average torque command value). In the present embodiment, the extreme values P21 and P22, and the difference Δτs are examples of "information used in control of the motor" according to the present disclosure. However, the "information used in control of the motor" is not limited to these examples, and can be, for example, a motor current, a voltage, an estimated value or a command value of a rotation speed or a torque, a calculated value based on the values, or the like.

The first pattern switching determination unit 263 determines whether to increase or decrease the pressure ratio of the pattern based on the difference Δτs calculated by the torque command difference calculation unit 261, and outputs the determination result as a first switching command. In the present embodiment, in a case where Δτs > 0, the first pattern switching determination unit 263 determines that the output pattern pressure ratio is to be UP (increased). In addition, in a case where Δτs < 0, the first pattern switching determination unit 263 determines that the output pattern pressure ratio is to be DOWN (decreased).

In the present embodiment, a switching method is adopted in which a target output pattern is selected with reference to a positive and negative inversion of Δτ, by utilizing the fact that a difference (Δτ) in output torque command values at the minimum and maximum points of speed is correlated with a phase in which the positive and negative inversion occurs and with a low vibration point of the compressor. The difference (Δτ) in torque command values at the minimum and maximum points of the estimated speed variation Δω is correlated with a vibration minimum phase in the vicinity of a control start phase in which the positive and negative inversion occurs. The control start phase in which Δτ undergoes the positive and negative inversion varies depending on the pressure ratio of the output pattern, and the control start phase tends to increase as the pressure ratio increases. By setting the control start phase, it is possible to select any output pattern with reference to the positive or negative determination of the sign of Δτ.

On the other hand, the speed variation extreme value comparison unit 262 receives as inputs the speed variation value Δω and the rotation position θes, and outputs a comparison result of the magnitudes of the deviations Δω obtained at each timing at which the two extreme values (P21 and P22) of the second polarity are generated. In the examples shown in FIGS. 6 to 8, the speed variation extremum comparison unit 262 first recognizes, in the same manner as the torque command difference calculation unit 261, one extreme value (a positive maximum value P11 in FIGS. 6 to 8) of the first polarity and two extreme values (a negative minimum value (first half) P21 and a negative minimum value (second half) P22 in FIGS. 6 to 8) of the second polarity different from the first polarity, which are included in the waveform W1 of the deviation Δω during one rotation of the compressor 5. Next, the speed variation extreme value comparison unit 262 compares the magnitudes (magnitudes of absolute values) of the minimum value (first half) P21 and the minimum value (second half) P22.

The second pattern switching determination unit 264 determines whether to increase, decrease, or maintain the pressure ratio of the pattern based on the comparison result of the speed variation extreme value comparison unit 262, and outputs the determination result as a second switching command. In the present embodiment, in a case where |the first half - the second half| < a predetermined speed variation difference threshold value, the second pattern switching determination unit 264 determines to maintain the output pattern pressure ratio. Here, the first half is a value of the minimum value (first half) P21, and the second half is a value of the minimum value (second half) P22. In addition, in a case where the first half > the second half, the second pattern switching determination unit 264 determines that the output pattern is to be UP. In addition, in a case where the first half < the second half, the second pattern switching determination unit 264 determines that the output pattern is to be DOWN.

In the present embodiment, a method is adopted in which the relationship of advance and delay of the peak position of the output torque with respect to the load torque peak position is determined from the magnitude relationship between the two minimum values of the estimated speed variation Δω during rotation, and the output torque pattern is selected to match the load torque peak position. Two speed minimum values of the estimated speed variation during one rotation are focused on, and from the magnitude relationship between the first half and the second half, it is possible to determine whether the output torque peak position is advanced or delayed with respect to the load torque peak position. As shown in FIG. 3A, the torque pattern to be output has a feature that the torque peak position is shifted to the front or the rear depending on whether the pressure ratio is low or high. For example, in a case where the speed minimum of the estimated speed variation is smaller in the first half than in the second half, a determination is made that the output torque peak is delayed with respect to the load torque peak position, and the "low pressure ratio pattern" is selected to shift the torque peak position forward. In this manner, pattern matching with the load torque can be achieved.

The pattern switching determination unit 265 includes a determination unit 266 and a determination stabilizing unit 267. The determination unit 266 outputs a determination result of maintenance, UP, or DOWN based on the first switching command and the second switching command. In a case where both the first switching command and the second switching command are UP, the determination unit 266 determines the determination result as UP. In addition, in a case where both the first switching command and the second switching command are DOWN, the determination unit 266 determines the determination result as DOWN. In addition, in another case, the determination unit 266 maintains the determination result.

The determination stabilizing unit 267 has a function as a filter for the determination result of the determination unit 266, and outputs an UP or DOWN pattern switching command when the determination result indicates n times or more UP or DOWN during m rotations.

### (About Torque Compensation)

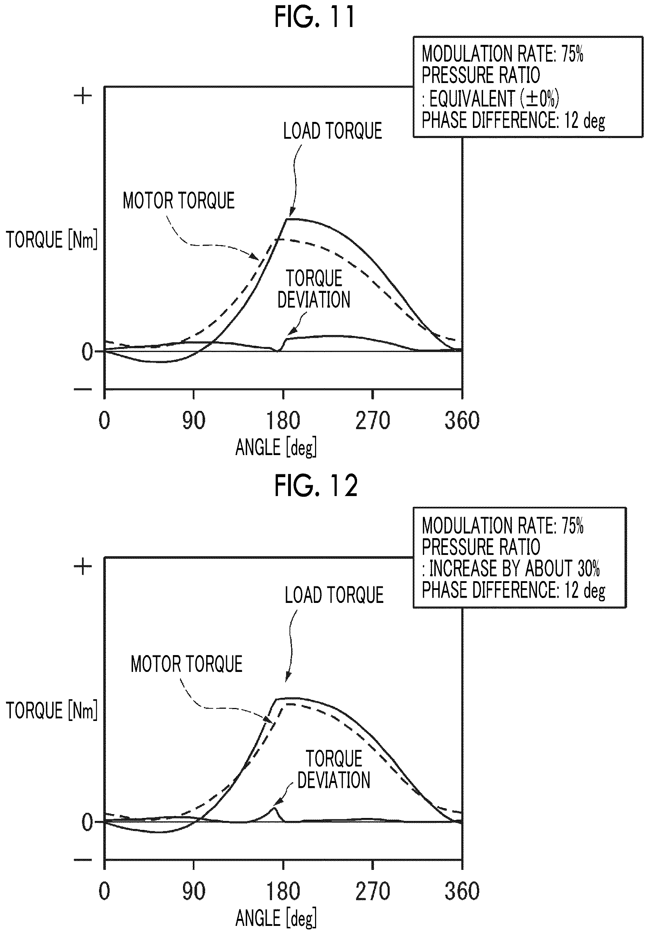

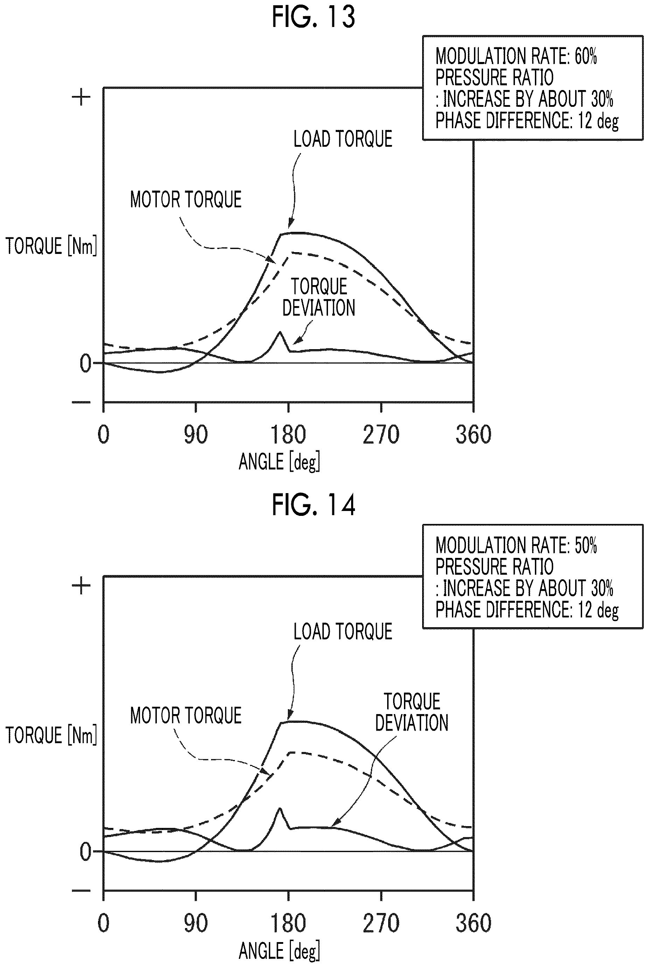

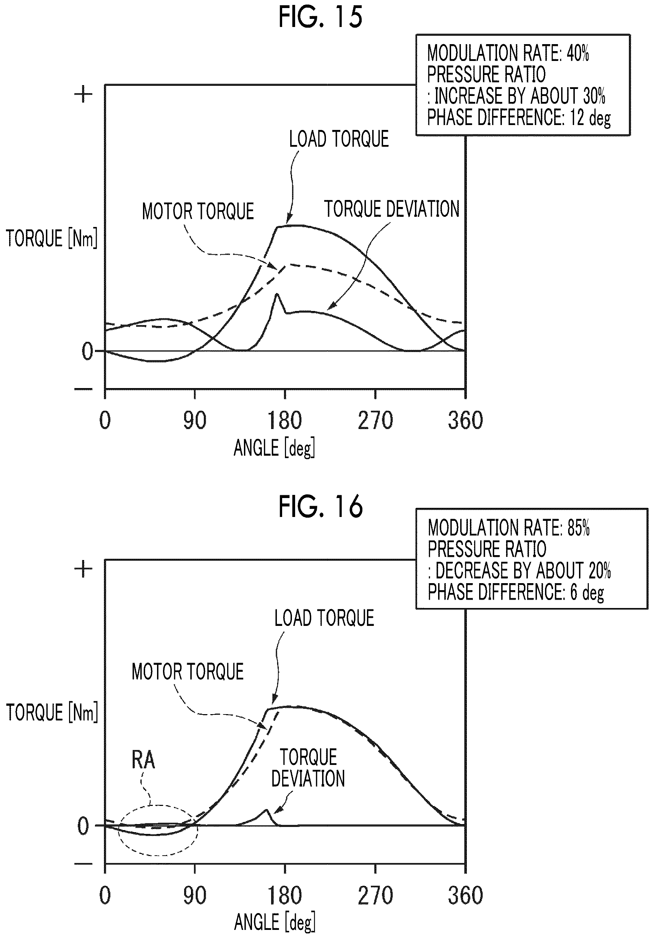

Here, an example of a relationship between a modulation rate, a selected pattern, and a torque deviation in torque compensation will be described with reference to FIGS. 9 to 16. FIGS. 9 to 16 show results obtained by simulation of a load torque, a motor torque, and a torque deviation (difference between the load torque and the motor torque) with a horizontal axis representing an angle. FIG. 9 is an example in which the modulation rate is set to 75%, a pattern in which the pressure ratio is increased by about 35% with respect to the load torque is used, and the phase difference is set to 12 degrees. Here, the pattern in which the pressure ratio is increased by about 35% with respect to the load torque means, for example, a pattern corresponding to a pressure ratio obtained by increasing the pressure ratio corresponding to the load torque by about 35%, instead of a pattern corresponding to the pressure ratio corresponding to the load torque, among the plurality of patterns shown in FIG. 3A. The phase difference is a value of phase adjustment, and a fixed value is used in the examples shown in FIGS. 9 to 15. FIG. 10 is an example in which the modulation rate is set to 75%, a pattern in which the pressure ratio is increased by about 60% with respect to the load torque is used, and the phase difference is set to 12 degrees. FIG. 11 is an example in which the modulation rate is set to 75%, a pattern equivalent to the pressure ratio of the load torque is used, and the phase difference is set to 12 degrees. FIG. 12 is an example in which the modulation rate is set to 75%, a pattern in which the pressure ratio is increased by about 30% with respect to the load torque is used, and the phase difference is set to 12 degrees. FIG. 13 is an example in which the modulation rate is set to 60%, a pattern in which the pressure ratio is increased by about 30% with respect to the load torque is used, and the phase difference is set to 12 degrees. FIG. 14 is an example in which the modulation rate is set to 50%, a pattern in which the pressure ratio is increased by about 30% with respect to the load torque is used, and the phase difference is set to 12 degrees. FIG. 15 is an example in which the modulation rate is set to 40%, a pattern in which the pressure ratio is increased by about 30% with respect to the load torque is used, and the phase difference is set to 12 degrees. FIG. 16 is an example in which the modulation rate is set to 85%, a pattern in which the pressure ratio is decreased by about 20% with respect to the load torque is used, and the phase difference is set to 6 degrees.

As shown in FIG. 9, when the pressure ratio of the output torque is appropriately set with respect to the pressure ratio of the load (for example, when the pressure ratio of the output torque is set to a value obtained by multiplying the reciprocal of the modulation rate with respect to the pressure ratio of the load (≈1/modulation rate - 1)), the torque deviation is reduced, and the vibration suppression is expected.

In addition, as shown in FIG. 10, in a case where the pressure ratio of the output torque is excessively increased with respect to the pressure ratio of the load, a torque deviation (deviation between the output torque and the load torque) increases.

In addition, as shown in FIG. 11, in a case where the pressure ratio of the load and the pressure ratio of the output torque are set to be the same, the torque deviation (deviation between the output torque and the load torque) increases.

In addition, as shown in FIGS. 12 to 15, in a case where the output torque pattern is set such that the modulation rate of the output torque is a Max of 75% and the torque deviation is minimized, when the modulation rate is lowered, the torque deviation increases (the loss can be reduced), and the vibration increases. However, since the effect of inertia appears, a control specification may be adopted in which the modulation rate is lowered as the rotation speed increases. In this case, by reducing a variation width of the torque command value, for example, it is possible to reduce a loss or the like caused by a change in the motor current, and thus improvement in efficiency can be expected.

In addition, as shown in FIG. 16, when the modulation rate is increased, it is possible to suppress an increase in the torque deviation without increasing the pressure ratio of the output torque. However, in the broken line region RA, the motor torque command (and the motor current value) becomes zero or negative value. In the present embodiment, since the position is estimated by using the motor current, there is a possibility that the estimation accuracy may deteriorate. Therefore, in the present embodiment, for example, the modulation rate is set low (for example, 75% or less) to appropriately set the pressure ratio of the output torque such that the torque deviation does not increase while avoiding a deterioration of position estimation accuracy.

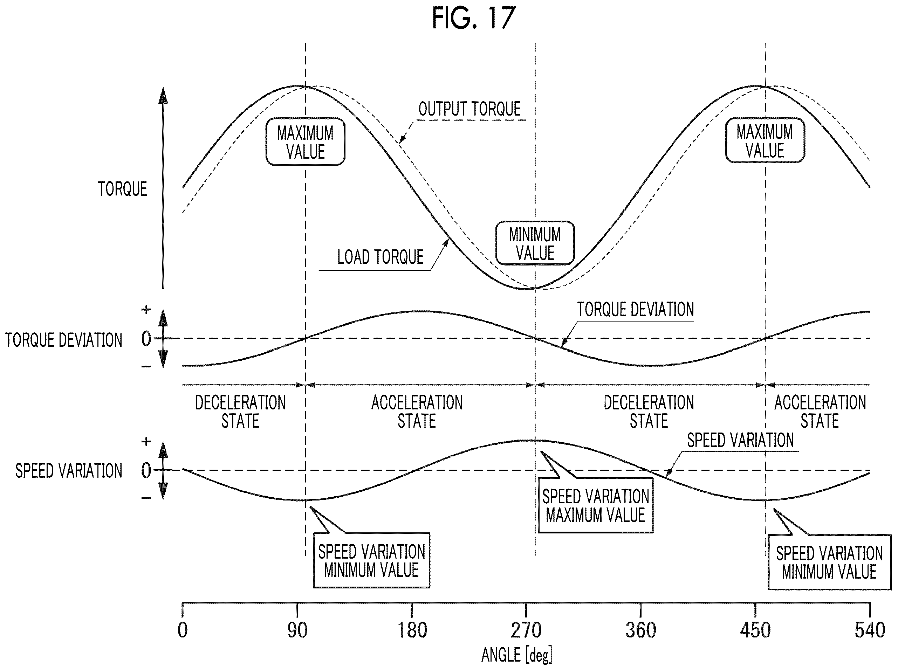

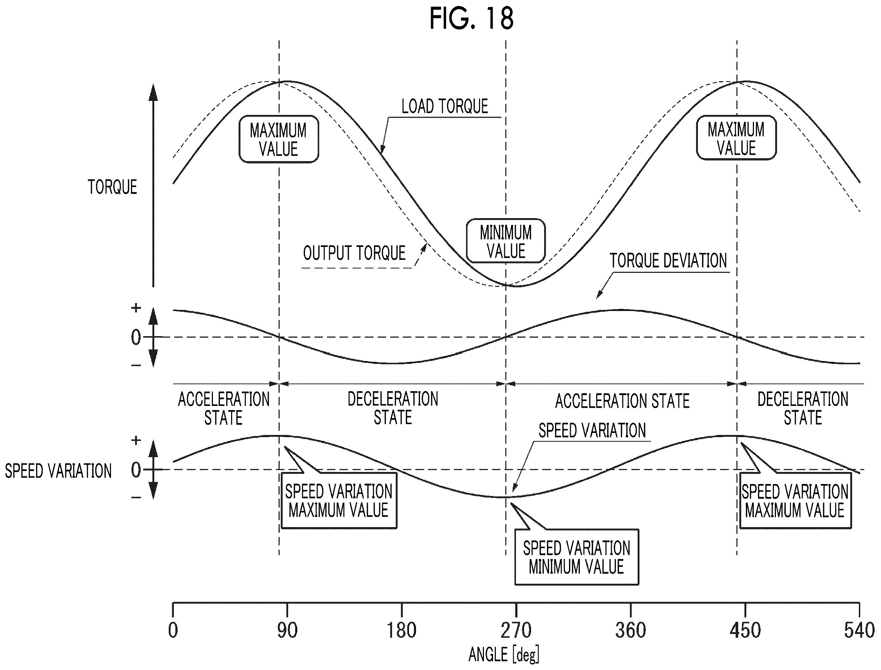

Next, the relationship between the torque deviation and the speed variation will be described with reference to FIGS. 17 and 18. For easy understanding, when a case where the load torque and the output torque are sinusoidal waves is considered, the torque deviation and the speed variation have a relationship as shown in FIGS. 17 and 18, and can be considered as follows. In practice, when the torque waveform deviates from a sinusoidal waveform, a plurality of minimum values or maximum values appear in one rotation cycle, but a similar idea can be obtained by comparing with the larger one. FIGS. 17 and 18 show an example of a change in the load torque, the output torque, the torque deviation (deviation between the output torque and the load torque), and the speed variation with a horizontal axis as an angle.

FIG. 17 shows a torque deviation between the load torque and the output torque (during delay) and an acceleration and deceleration state. In a state shown in FIG. 17, when the torque command is small at the speed maximum value, the phase of the output torque is delayed. Therefore, the pattern is changed to the pattern having a low pressure ratio to advance the phase. In addition, when the torque command is large at the speed minimum value, the phase of the output torque is delayed. Therefore, the pattern is changed to the pattern having a low pressure ratio to advance the phase.

FIG. 18 shows a torque deviation between the load torque and the output torque (during advancing) and an acceleration and deceleration state. In a state shown in FIG. 18, when the torque command is large at the speed maximum value, the phase of the output torque is advanced. Therefore, the pattern is changed to the pattern having a high pressure ratio to delay the phase. In addition, when the torque command is small at the speed minimum value, the phase of the output torque is advanced. Therefore, the pattern is changed to the pattern having a high pressure ratio to delay the phase.

### (Operations and Effects and the like)

According to the present embodiment, it is possible to suppress the vibration of the compressor under a wide range of load pressure conditions and to achieve stable control (to avoid motor step-out). In addition, since the vibration control and the efficiency are in a trade-off relationship, when vibration suppression is prioritized, the modulation rate is set high, and when efficiency is prioritized, the modulation rate is lowered and a certain degree of vibration is allowed (while controlling the estimated rotation speed variation to be within a predetermined threshold value), so that the effective value of the motor current is reduced and the efficiency can be improved.

As described above, in the present embodiment, a plurality of torque patterns are held as the active torque control. In addition, as shown in FIG. 3A, by including the control phase information in the torque pattern, basically, the phase adjustment can be made unnecessary at the time of the pattern switching. In addition, the torque modulation rate can be set to be slightly lower (about 75%), and the pressure ratio of the torque pattern can be set to be higher (about 30% up with respect to the load). In addition to the above, the switching of the torque pattern may be determined, for example, by using any one of the estimated rotation speed variation characteristic, the heat exchange temperature sensor value, and the pressure sensor value, and a combination thereof. In addition, the switching timing may be a position where the compression load is zero, a position where the estimated speed is low, or the like.

With the control device, the control method, and the air conditioner according to the present embodiment, the control device 1 controls the rotation speed of the motor 2 by controlling the inverter 4 that AC-drives the motor 2 that rotationally drives the compressor 5. In addition, the control device 1 corrects the torque command value (average torque command value τa*) calculated according to the deviation Δω between the rotation speed of the motor 2 and the rotation speed command value, based on any one of the plurality of patterns TP1 to TP13 for coping with the load variation of the compressor 5, and controls the inverter 4 based on the corrected torque command value (output torque command value τ*). In this case, the control device 1 recognizes one extreme value (P11) of the first polarity and two extreme values (P21 and P22) of the second polarity different from the first polarity, which are included in the waveform W1 of the deviation Δω during one rotation of the compressor 5, and selects any one of a plurality of patterns, based on information (P21, P22, Δτs) used in control of the motor 2 obtained at each timing at which a plurality of extreme values occur. According to this configuration, the pattern can be appropriately selected according to the variation in the load torque.

### <Second Embodiment>

FIG. 19 shows a configuration example of a pattern switching determination unit 265a according to a second embodiment of the present disclosure. The pattern switching determination unit 265a shown in FIG. 19 has a configuration corresponding to the pattern switching determination unit 265 shown in FIG. 5, and only the configuration of the pattern switching determination unit 265a is different from that of the first embodiment in the second embodiment. The pattern switching determination unit 265a shown in FIG. 19 includes a pressure ratio change determination unit 268, which is newly provided, as compared to the pattern switching determination unit 265 shown in FIG. 5.

The pressure ratio change determination unit 268 estimates the pressure ratio of the compressor 5 based on the detection result of a heat exchanger temperature sensor (not shown) that measures the temperature of each part of the heat exchanger provided in the air conditioner 100, and partially limits the function of the pattern switching command based on the estimated pressure ratio. The pressure ratio change determination unit 268 first converts the heat exchanger temperature into a pressure ratio (step S1). Next, the pressure ratio change determination unit 268 stores the pressure ratio (this time) (step S2). Next, in a case where |this time - last time| < a predetermined pressure ratio threshold value, the pressure ratio change determination unit 268 does not output the pattern switching command, in a case where this time > last time, the pressure ratio change determination unit 268 allows only the output of the pattern switching command for increasing the pressure ratio, and in a case where this time < last time, the pressure ratio change determination unit 268 allows only the output of the pattern switching command for decreasing the pressure ratio (step S3).

According to the present embodiment, the switching of the torque pattern can be limited to a case where the pressure ratio changes by a predetermined pressure ratio threshold value or more.

### <Other Embodiments>

The embodiments of the present disclosure have been described above in detail with reference to the drawings. However, specific configurations are not limited to the embodiments, and include a design modification or the like within a scope which does not depart from the gist of the present disclosure. In the above-described embodiment, the rotational position, the rotation speed, and the like are estimated based on a current value and the like without being detected by using a sensor. However, the rotational position, the rotation speed, and the like may be detected by using a sensor. In addition, the current value is not limited to the detection of an AC current using the sensor, and the AC current may be estimated by detecting, for example, a DC current input to an inverter circuit. In addition, in the above-described embodiment, the normalized torque pattern selection unit 26 includes the torque command difference calculation unit 261 and the speed variation extreme value comparison unit 262, but any one of the torque command difference calculation unit 261 and the speed variation extreme value comparison unit 262 may be omitted. In that case, any one of the first pattern switching determination unit 263 and the second pattern switching determination unit 264 is also omitted. In addition, the pattern switching determination unit 265 does not include, for example, the determination unit 266, and outputs the pattern switching command based on any one of the first switching command or the second switching command.

### <Computer Configuration>

FIG. 20 shows a configuration example of a computer according to at least one embodiment.

A computer 90 includes a processor 91, a main memory 92, a storage 93, and an interface 94.

The control devices 1, 1a, and 1b described above are mounted in the computer 90. The operation of each processing unit described above is stored in the storage 93 in a form of a program. The processor 91 reads out the program from the storage 93, loads the program into the main memory 92, and performs the above-described processing according to the program. Further, the processor 91 ensures a storage area corresponding to each storage unit described above in the main memory 92 according to the program.

The program may be for realizing some of the functions to be exhibited by the computer 90. For example, the program may exhibit a function in combination with another program already stored in a storage or in combination with another program implemented in another device. In another embodiment, the computer may include a custom large scale integrated (LSI) circuit such as a programmable logic device (PLD), in addition to or instead of the above-described configuration. Examples of the PLD include a programmable array logic (PAL), a generic array logic (GAL), a complex programmable logic device (CPLD), and a field programmable gate array (FPGA). In this case, some or all of the functions implemented by the processor may be implemented by the integrated circuit.

Examples of the storage 93 include a hard disk drive (HDD), a solid state drive (SSD), a magnetic disc, a magneto-optical disc, a compact disc read only memory (CD-ROM), a digital versatile disc read only memory (DVD-ROM), and a semiconductor memory. The storage 93 may be an internal medium directly connected to a bus of the computer 90, or may be an external medium connected to the computer 90 via the interface 94 or a communication line. In addition, when the program is distributed to the computer 90 via the communication line, the computer 90 receiving the distribution may load the program into the main memory 92, and may perform the above-described processing. In at least one embodiment, the storage 93 is a non-temporary tangible storage medium.

### <Additional Notes>

The control device 1 described in each embodiment is understood as follows, for example.
(1) A control device 1 according to a first aspect is the control device 1 that controls a rotation speed of a motor 2 that rotationally drives a compressor 5 by controlling an inverter 4 that AC-drives the motor 2, in which the control device 1 corrects a torque command value (average torque command value τa) calculated according to a deviation Δω (speed variation value Δω) between a rotation speed ωes of the motor 2 and a rotation speed command value ω*, based on any one of a plurality of patterns (TP1 to TP13) to correspond to a load variation of the compressor 5, and when the inverter 4 is controlled based on the corrected torque command value (output torque command value τ*), one extreme value (P11) of a first polarity and two extreme values (P21, P22) of a second polarity different from the first polarity, recognizes the extreme values being included in a waveform W1 of the deviation (speed variation value Δω) during one rotation of the compressor 5, and selects any one of the plurality of patterns (TP1 to TP13) based on pieces of information (P11, P12, P22, Δτs), which are used in control of the motor 2 obtained at each timing at which a plurality of the extreme values occur.
(2) The control device 1 according to a second aspect is the control device 1 of (1), in which the control device 1 selects any one of the plurality of patterns based on a comparison result of magnitudes of the deviations obtained at each timing at which the two extreme values of the second polarity occur, as the information. According to the present aspect, it is possible to appropriately select the torque pattern according to whether or not the output torque peak is delayed with respect to the load torque peak.
(3) The control device 1 according to a third aspect is the control device 1 of (1) or (2), in which the control device 1 selects any one of the plurality of patterns based on a difference between a difference between the corrected torque command value obtained at a timing at which the extreme value of the first polarity occurs and an average value of the torque command values, and a difference between the corrected torque command value obtained at a timing at which an extreme value having a larger absolute value among the two extreme values of the second polarity occurs and the average value of the torque command values, as the information. According to the present aspect, it is possible to select the torque pattern based on information highly correlated with vibration suppression.
(4) The control device 1 according to a fourth aspect is the control device 1 of (1) to (3), in which the plurality of patterns correspond to a plurality of different pressure ratios of the compressor, the selection of any one of the plurality of patterns is performed in order of magnitude of the pressure ratio in a direction of increasing or decreasing the pressure ratio, and a next pattern is selected in a case where the direction of selection based on the comparison result and the direction of selection based on the difference coincide with each other. According to the present aspect, it is possible to easily suppress a sudden change in the torque pattern.
(5) The control device 1 according to a fifth aspect is the control device 1 of (1) to (4), in which the control device 1 switches between an operation state in which any one of the plurality of patterns is appropriately selected based on the information, the torque command value is corrected based on the selected pattern, and the inverter is controlled based on the corrected torque command value, and an operation state in which the torque command value is corrected based on one pattern and the inverter is controlled based on the corrected torque command value, according to the rotation speed of the motor, and controls the rotation speed of the motor. According to the present aspect, it is possible to easily minimize the compensation by the torque pattern, and it is possible to simultaneously reduce vibration and maintain efficiency.
(6) The control device 1 according to a sixth aspect is the control device 1 according to (1) to (5), in which the control device 1 corrects the torque command value based on a value obtained by multiplying the pattern by a predetermined modulation rate. According to the present aspect, it is possible to appropriately correct the torque command value.

### Reference Signs List

1: Control device
2: Motor
3: AC power supply
4: Inverter
5: Compressor
10: Current sensor
11: Speed/position estimation unit
12: Speed PI control unit
13: Load torque compensation unit
14: Subtraction unit
15: Addition unit
16: Current conversion unit
17: Subtraction unit
18: Current PI control unit
20: Speed control unit
26: Normalized torque pattern selection unit
27: Addition unit
100: Air conditioner

## Claims

1. A control device that controls a rotation speed of a motor that rotationally drives a compressor by controlling an inverter that AC-drives the motor,
wherein the control device
corrects a torque command value calculated according to a deviation between the rotation speed of the motor and a rotation speed command value, based on any one of a plurality of patterns to correspond to a load variation of the compressor, and
when the inverter is controlled based on the corrected torque command value, one extreme value of a first polarity and two extreme values of a second polarity different from the first polarity, recognizes the extreme values being included in a waveform of the deviation during one rotation of the compressor, and selects any one of the plurality of patterns based on pieces of information, which are used in control of the motor obtained at each timing at which a plurality of the extreme values occur.

2. The control device according to claim 1,
the control device selects any one of the plurality of patterns based on a comparison result of magnitudes of the deviations obtained at each timing at which the two extreme values of the second polarity occur, as the information.

3. The control device according to claim 2,
wherein the control device selects any one of the plurality of patterns based on a difference between
a difference between the corrected torque command value obtained at a timing at which the extreme value of the first polarity occurs and an average value of the torque command values, and
a difference between the corrected torque command value obtained at a timing at which an extreme value having a larger absolute value among the two extreme values of the second polarity occurs and the average value of the torque command values, as the information.

4. The control device according to claim 3,
wherein the plurality of patterns correspond to a plurality of different pressure ratios of the compressor,
the selection of any one of the plurality of patterns is performed in order of magnitude of the pressure ratio in a direction of increasing or decreasing the pressure ratio, and
a next pattern is selected in a case where the direction of selection based on the comparison result and the direction of selection based on the difference coincide with each other.

5. The control device according to claim 4,
wherein the control device switches between an operation state in which any one of the plurality of patterns is appropriately selected based on the information, the torque command value is corrected based on the selected pattern, and the inverter is controlled based on the corrected torque command value, and an operation state in which the torque command value is corrected based on one pattern and the inverter is controlled based on the corrected torque command value, according to the rotation speed of the motor, and controls the rotation speed of the motor.

6. The control device according to any one of claims 1 to 5,
wherein the control device corrects the torque command value based on a value obtained by multiplying the pattern by a predetermined modulation rate.

7. A control method for controlling a rotation speed of a motor that rotationally drives a compressor by controlling an inverter that AC-drives the motor, the method comprising:
correcting a torque command value calculated according to a deviation between the rotation speed of the motor and a rotation speed command value, based on any one of a plurality of patterns to correspond to a load variation of the compressor; and
when the inverter is controlled based on the corrected torque command value, one extreme value of a first polarity and two extreme values of a second polarity different from the first polarity, recognizing the extreme values being included in a waveform of the deviation during one rotation of the compressor, and selecting any one of the plurality of patterns based on pieces of information, which are used in control of the motor obtained at each timing at which the plurality of extreme values occur.

8. An air conditioner comprising:
a compressor;
a motor that rotationally drives the compressor;
an inverter that AC-drives the motor; and
a control device that controls a rotation speed of the motor by controlling the inverter,
wherein the control device
corrects a torque command value calculated according to a deviation between the rotation speed of the motor and a rotation speed command value, based on any one of a plurality of patterns to correspond to a load variation of the compressor, and
when the inverter is controlled based on the corrected torque command value, one extreme value of a first polarity and two extreme values of a second polarity different from the first polarity, recognizes the extreme values being included in a waveform of the deviation during one rotation of the compressor, and selects any one of the plurality of patterns based on pieces of information, which are used in control of the motor obtained at each timing at which the plurality of extreme values occur.
